(19) Europäisches Patentamt
European Patent Office
Office européen des brevets

(11) **EP 4 534 953 A1**

(12) **EUROPEAN PATENT APPLICATION**
published in accordance with Art. 153(4) EPC

(43) Date of publication:
09.04.2025 Bulletin 2025/15

(51) International Patent Classification (IPC):
*G01B 21/20* (2006.01)    *G06T 7/12* (2017.01)

(21) Application number: 23811082.9

(22) Date of filing: 24.05.2023

(86) International application number:
PCT/CN2023/095964

(87) International publication number:
WO 2023/227011 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.05.2022 CN 202210582401

(71) Applicant: Hangzhou Hikrobot Co., Ltd.
Hangzhou, Zhejiang 310051 (CN)

(72) Inventors:
• LONG, Xuexiong
  Hangzhou, Zhejiang 310051 (CN)
• CHANG, Xu
  Hangzhou, Zhejiang 310051 (CN)
• DENG, Zhihui
  Hangzhou, Zhejiang 310051 (CN)

(74) Representative: Epping - Hermann - Fischer
Patentanwaltsgesellschaft mbH
Schloßschmidstraße 5
80639 München (DE)

(54) **CALIBRATION METHOD AND APPARATUS FOR EXTERNAL PARAMETERS OF LINEAR PROFILER AND ELECTRONIC DEVICE**

(57) The embodiments of the present application provide a calibration method and apparatus for extrinsic parameters of a linear profiler, and an electronic device, which are applied to the technical field of measurements. The method includes acquiring multiple frames of contour point clouds collected by the linear profiler for a calibration block during a movement of the calibration block along with a measurement platform; performing point cloud segmentation on each contour point cloud to obtain surface point clouds belonging to different measurement surfaces; for each surface point cloud, establishing a constraint relationship of the surface point cloud based on feature points in the surface point cloud and a surface feature of a measurement surface to which the surface point cloud belongs, constructing an objective optimization function for an estimated conversion relationship based on the estimated conversion relationship and constraint relationships of surface point clouds, optimizing the objective optimization function to obtain optimized conversion parameters between a linear profiler coordinate system and a measurement platform coordinate system as extrinsic parameters between the linear profiler and the measurement platform. Through the present solution, the calibration of the extrinsic parameters between the linear profiler and the measurement platform can be achieved.

Fig.1

## Description

The present application claims the priority to a Chinese patent application No. 202210582401.7 filed with the China National Intellectual Property Administration (CNIPA) on May 26, 2022 and entitled "CALIBRATION METHOD AND APPARATUS FOR EXTERNAL PARAMETERS OF LINEAR PROFILER AND ELECTRONIC DEVICE", which is incorporated herein by reference in its entirety.

## Technical Field

The present application relates to the technical field of measurements, in particular to a calibration method and apparatus for extrinsic parameters of a linear profiler, and an electronic device.

## Background

A linear profiler is a precise device for measuring shapes of profile lines and section outlines of various mechanical parts. Generally, when the linear profiler is used to measure an object to be measured, the object to be measured needs to be placed on a measurement platform, and the measurement platform mainly drives a movement of the object to be measured through rotation or translation. The linear profiler continuously collects contour point clouds of the object to be measured during the movement of the object to be measured, and then contour information of the object to be measured can be determined based on the contour point clouds collected by the linear profiler.

In the above process, because the contour point clouds collected by the linear profiler need to be used to determine the contour information of the object to be measured, and in the process of determining the contour information of the object to be measured, extrinsic parameters between the linear profiler and the measurement platform needs to be used. Therefore, before the contour information is determined, the extrinsic parameters between the linear profiler and the measurement platform need to be calibrated, so as to determine the extrinsic parameters between the linear profiler and the measurement platform. Therefore, how to calibrate the extrinsic parameters between the linear profiler and the measurement platform is an urgent technical problem to be solved.

## Summary

The purpose of the embodiments of the present application is to provide a calibration method and apparatus for extrinsic parameters of a linear profiler, and an electronic device, so as to achieve the calibration of the extrinsic parameters of the linear profiler. The specific technical solutions are as follows:
In a first aspect, an embodiment of the present application provides a calibration method for extrinsic parameters of a linear profiler, including acquiring multiple frames of contour point clouds collected by the linear profiler for a calibration block during a movement of the calibration block along with a measurement platform; performing point cloud segmentation on each contour point cloud to obtain surface point clouds belonging to different measurement surfaces; for each surface point cloud, establishing a constraint relationship of the surface point cloud based on feature points in the surface point cloud and a surface feature of a measurement surface to which the surface point cloud belongs; wherein, the surface feature of each measurement surface is a feature describing a geometric attribute of the measurement surface; constructing an objective optimization function for an estimated conversion relationship between a linear profiler coordinate system and a measurement platform coordinate system, based on the estimated conversion relationship and constraint relationships of surface point clouds; optimizing the objective optimization function to obtain optimized conversion parameters between the linear profiler coordinate system and the measurement platform coordinate system as extrinsic parameters between the linear profiler and the measurement platform.

Optionally, performing the point cloud segmentation on each contour point cloud to obtain the surface point clouds belonging to the different measurement surfaces includes: for each contour point cloud, performing the point cloud segmentation on the contour point cloud based on a segmentation strategy corresponding to a type of the calibration block, to obtain the surface point clouds belonging to the different measurement surfaces.

Optionally, performing the point cloud segmentation on the contour point cloud based on the segmentation strategy corresponding to the type of the calibration block, to obtain the surface point clouds belonging to the different measurement surfaces includes: if the calibration block is a cone, performing curve fitting and straight line fitting on the feature points in the contour point cloud, and taking the feature points corresponding to the fitted curve as a conical surface point cloud, and determining feature points corresponding to the fitted straight line as a bottom surface point cloud; if the calibration block is a sphere, performing circle fitting and the straight line fitting on the feature points in the contour point cloud, and taking the feature points corresponding to the fitted curve as a spherical surface point cloud, and taking feature points corresponding to the fitted straight line as the bottom surface point cloud.

Optionally, before constructing the objective optimization function for the estimated conversion relationship between the linear profiler coordinate system and the measurement platform coordinate system, based on the estimated conversion relationship and the constraint relationships of the surface point clouds, the method further includes determining a coordinate system conversion relationship between the linear profiler coordinate system and the measurement platform coordinate system as the estimated conversion relationship based on the acquired multiple frames of contour point clouds.

Optionally, determining the coordinate system conversion relationship between the linear profiler coordinate system and the measurement platform coordinate system as the estimated conversion relationship based on the acquired multiple frames of contour point clouds includes: determining initial conversion parameters between the linear profiler coordinate system and the measurement platform coordinate system based on the multiple frames of contour point clouds; taking the initial conversion parameters as estimated values of parameters in a conversion formula between the linear profiler coordinate system and the measurement platform coordinate system to obtain the estimated conversion relationship.

Optionally, the initial conversion parameters include initial rotation parameters; determining the initial conversion parameters between the linear profiler coordinate system and the measurement platform coordinate system based on the multiple frames of contour point clouds includes: determining a slope of a fitted straight line corresponding to bottom surface feature points in the multiple frames of contour point clouds, and determining a first rotation angle of the linear profiler coordinate system relative to the measurement platform coordinate system based on the slope; wherein, the bottom surface feature points are the feature points belonging to the measurement platform; determining a feature point with a largest height value in the multiple frames of contour point clouds as a largest feature point; calculating a ratio of a height value of the largest feature point to an actual height of the calibration block, and determining a second rotation angle of the linear profiler coordinate system relative to the measurement platform coordinate system based on the ratio; determining the initial rotation parameters based on the first rotation angle and the second rotation angle.

Optionally, the initial conversion parameters include initial translation parameters; determining the initial conversion parameters between the linear profiler coordinate system and the measurement platform coordinate system based on the multiple frames of contour point clouds includes: for any two adjacent frames of contour point clouds, determining a first height difference of feature points with respective largest height values in the two frames of contour point clouds; determining a curve arc length corresponding to the first height difference and a horizontal displacement of the calibration block in each sampling interval based on a surface feature of the calibration block; determining a first displacement in a first direction of the linear profiler coordinate system relative to the measurement platform coordinate system based on the curve arc length and the horizontal displacement; determining a second displacement in a second direction of the linear profiler coordinate system relative to the measurement platform coordinate system based on the curve arc length and the first height difference; wherein, the first direction and the second direction are orthogonal; determining the initial translation parameters based on the first displacement and the second displacement.

Optionally, optimizing the objective optimization function to obtain the optimized conversion parameters between the linear profiler coordinate system and the measurement platform coordinate system as the extrinsic parameters between the linear profiler and the measurement platform includes: performing iteration optimization to the conversion parameters in the objective optimization function until a residual of the objective optimization function is less than a preset threshold; taking the conversion parameters in the objective optimization function when the residual of the objective optimization function is less than the preset threshold as the extrinsic parameters between the linear profiler and the measurement platform. During the movement of the calibration block along with the measurement platform, multiple frames of contour point clouds collected by the linear profiler are acquired; for each frame of the contour point cloud, feature point segmentation is performed on feature points in the frame of the contour point cloud to obtain multiple contour feature point sets; feature points in each contour feature point set belongs to the same surface; for each contour feature point set, a constraint relationship corresponding to the contour feature point set is established based on the feature points in the contour feature point set and the surface feature corresponding to contour feature point set; wherein, the surface feature corresponding to each contour feature point set is the surface feature of the surface to which the feature points in the contour feature point set belong; an objective optimization function is constructed based on an estimated coordinate system conversion relationship and the constraint relationships corresponding to the contour feature point sets; wherein, the coordinate system conversion relationship is the conversion relationship between the linear profiler coordinate system and the measurement platform coordinate system; the objective optimization function is optimized to obtain optimized conversion parameters between the linear profiler coordinate system and the measurement platform coordinate system as the extrinsic parameters of the linear profiler.

Optionally, performing the feature point segmentation on the feature points in the frame of the contour point cloud to obtain the multiple contour feature point sets includes: performing the feature point segmentation on the feature points in the frame of the contour point cloud based on a segmentation strategy corresponding to a type of the calibration block, to obtain the multiple contour feature point sets.

Optionally, performing the feature point segmentation on the feature points in the frame of the contour point cloud based on the segmentation strategy corresponding to the type of the calibration block, to obtain the multiple contour feature point sets includes: if the calibration block is a cone, performing curve fitting and straight line fitting on the feature points in the frame of the contour point cloud, and determining a conical surface feature point set based on feature points corresponding to the fitted curve, and determining a bottom surface feature point set based on feature points corresponding to the fitted straight line; if the calibration block is a sphere, performing circle fitting and the straight line fitting on the feature points in the frame of the contour point cloud, and determining a spherical surface feature point set based on feature points corresponding to the fitted curve, and determining a bottom surface feature point set based on feature points corresponding to the fitted straight line.

Optionally, before constructing the objective optimization function based on the estimated coordinate system conversion relationship and the constraint relationships corresponding to the contour feature point sets, the method further includes: estimating initial conversion parameters between the linear profiler coordinate system and the measurement platform coordinate system based on the acquired contour point clouds, and taking the initial conversion parameters as initial values for the conversion relationship between the linear profiler coordinate system and the measurement platform coordinate system to obtain the estimated coordinate system conversion relationship.

Optionally, the initial conversion parameters include initial rotation parameters; estimating the initial conversion parameters between the linear profiler coordinate system and the measurement platform coordinate system based on the acquired contour point clouds includes: determining a slope of a fitted straight line corresponding to bottom surface feature points in the acquired contour point clouds, and determining a first rotation angle of the linear profiler coordinate system relative to the measurement platform coordinate system based on the slope; wherein, the bottom surface feature points are the feature points belonging to the measurement platform; determining a feature point with a largest height value in the contour point clouds as a largest feature point; calculating a ratio of a height value of the largest feature point to a height of the calibration block corresponding to the height value of the largest feature point, and determining a second rotation angle of the linear profiler coordinate system relative to the measurement platform coordinate system based on the ratio; determining the initial rotation parameters based on the first rotation angle and the second rotation angle.

Optionally, the initial conversion parameters include initial translation parameters; estimating the initial conversion parameters between the linear profiler coordinate system and the measurement platform coordinate system based on the acquired contour point clouds includes: for any two adjacent frames of contour point clouds, determining a first height difference of feature points with respective largest height values in the two frames of contour point clouds; determining a curve arc length corresponding to the first height difference and a horizontal displacement of the calibration block in a sampling interval based on a surface feature of the calibration block; determining a first displacement in a first direction of the linear profiler coordinate system relative to the measurement platform coordinate system based on the curve arc length and the horizontal displacement; determining a second displacement in a second direction of the linear profiler coordinate system relative to the measurement platform coordinate system based on the curve arc length and the first height difference; wherein, the first direction and the second direction are orthogonal; determining the initial translation parameters based on the first displacement and the second displacement.

Optionally, optimizing the objective optimization function to obtain the optimized conversion parameters between the linear profiler coordinate system and the measurement platform coordinate system as the extrinsic parameters of the linear profiler includes: performing iteration optimization to conversion parameters between the linear profiler coordinate system and the measurement platform coordinate system until a residual of the objective optimization function is less than a preset threshold.

Optionally, the objective optimization function further includes a sampling interval of the linear profiler, the method further includes:

obtaining an optimized sampling interval by optimizing the objective optimization function. In a second aspect, an embodiment of the present application provides a calibration apparatus for extrinsic parameters of a linear profiler, including: a point cloud acquiring module, configured to acquire multiple frames of contour point clouds collected by the linear profiler for a calibration block during a movement of the calibration block along with a measurement platform; a point cloud segmentation module, configured to perform point cloud segmentation on each contour point cloud to obtain surface point clouds belonging to different measurement surfaces; a relationship establishing module, configured for each surface point cloud, to establish a constraint relationship of the surface point cloud based on feature points in the surface point cloud and a surface feature of a measurement surface to which the surface point cloud belongs; a function constructing module, configured to construct an objective optimization function for an estimated conversion relationship between a linear profiler coordinate system and a measurement platform coordinate system, based on the estimated conversion relationship and the constraint relationships of the surface point clouds; a function optimizing module, configured to optimize the objective optimization function to obtain optimized conversion parameters between the linear profiler coordinate system and the measurement platform coordinate system as extrinsic parameters between the linear profiler and the measurement platform.

In a third aspect, an embodiment of the present application provides an electronic device, including a processor, a communication interface, a memory and a communication bus, wherein the processor, the communication interface and the memory communicate with each other through the communication bus; the memory is configured to store a computer program; the processor is configured to implement the method steps according to the first aspect when executing the program stored on the memory.

In a fourth aspect, an embodiment of the present application provides a computer-readable storage medium, which stores a computer program therein, which when executed by a processor, implements the method steps according to the first aspect.

Beneficial effects of the embodiments of the present application are as follows:

In the calibration method for the extrinsic parameters of the linear profiler provided by the embodiments of the present application, the multiple frames of contour point clouds collected by the linear profiler can be acquired for the calibration block during the movement of the calibration block along with the measurement platform; the point cloud segmentation can be performed on each contour point cloud to obtain the surface point clouds belonging to different measurement surfaces; for each surface point cloud, the constraint relationship of the surface point cloud can be established based on the feature points in the surface point cloud and the surface feature of the measurement surface to which the surface point cloud belongs; the objective optimization function can be constructed for the estimated conversion relationship between the linear profiler coordinate system and the measurement platform coordinate system, based on the estimated conversion relationship and the constraint relationships of the surface point clouds; the objective optimization function can be optimized to obtain the optimized conversion parameters between the linear profiler coordinate system and the measurement platform coordinate system as the extrinsic parameters between the linear profiler and the measurement platform. Since the linear profiler can be to collect the multiple frames of contour point clouds for the calibration block, and the frames of contour point clouds can be segmented into surface point clouds of the different measurement surfaces according to the different measurement surfaces to which the surface point clouds belong, and further since a geometric model of the calibration block is known, that is, the surface feature of each measurement surface of the calibration block is known, the constraint relationship of the surface point cloud belonging to the measurement surface can be established based on the surface feature of each measurement surface, and the objective optimization function is constructed, and then the conversion parameters between the linear profiler coordinate system and the measurement platform coordinate system are optimized, so as to obtain the extrinsic parameters between the linear profiler and the measurement platform. It can be seen that the embodiment of the present application achieves the calibration of the extrinsic parameters of the linear profiler. That is, the calibration of the extrinsic parameters between the linear profiler and the measurement platform is achieved.

Of course, it is not necessary for any product or method implementing the present application to achieve all the advantages described above simultaneously.

## Brief Description of the Drawings

In order to more clearly describe the technical solution of the embodiments of the present application or the prior art, accompanying drawings that need to be used in the embodiments or the prior art will be briefly introduced below. Obviously, the accompanying drawings described below are only some of the embodiments of the present application. For those skilled in the art, they may also obtain other embodiments based on these accompanying drawings without any creative efforts.

Fig. 1 is a flow chart of a first calibration method for extrinsic parameters of a linear profiler provided by an embodiment of the present application;

Fig. 2 is a schematic diagram of a collection performed by a linear profiler provided by an embodiment of the present application;

Fig. 3 is a contour schematic diagram provided by an embodiment of the present application;

Fig. 4 is a contour schematic diagram of calibration blocks provided by an embodiment of the present application;

Fig. 5 is a flow chart of a second calibration method for extrinsic parameters of a linear profiler provided by an embodiment of the present application;

Fig. 6 is a schematic diagram for determining a positive direction of X axis provided by an embodiment of the present application;

Fig. 7 is a flow chart of a third calibration method for extrinsic parameters of a linear profiler provided by an embodiment of the present application;

Fig. 8 is a flow chart of a fourth calibration method for extrinsic parameters of a linear profiler provided by an embodiment of the present application;

Fig. 9 is a schematic diagram of a cone calibration of a linear profiler provided by an embodiment of the present application;

Fig 10 is a flow chart of a fifth calibration method for extrinsic parameters of a linear profiler provided by an embodiment of the present application.

Fig. 11 is a structural schematic diagram of a calibration apparatus for extrinsic parameters of a linear profiler provided by an embodiment of the present application;

Fig. 12 is a structural schematic diagram of an electronic device provided by an embodiment of the present application.

**Detailed Description**

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art without any creative efforts fall into the scope of protection of the present application.

In order to realize the calibration of extrinsic parameters of a linear profiler, the embodiment of the present application provides a calibration method and apparatus for extrinsic parameters of a linear profiler, and an electronic device.

It should be noted that the embodiments of the present application can be applied to various types of electronic devices, such as a personal computer, a server, a mobile phone and other device with data processing capability. Moreover, the calibration method for extrinsic parameters of a linear profiler provided by the embodiments of the present application can be realized by means of software, hardware or a combination of software and hardware.

The calibration method for extrinsic parameters of a linear profiler provided by the embodiment of the present application may include:

acquiring multiple frames of contour point clouds collected by the linear profiler for a calibration block during a movement of the calibration block along with a measurement platform;

performing point cloud segmentation on each contour point cloud to obtain surface point clouds belonging to different measurement surfaces;

for each surface point cloud, establishing a constraint relationship of the surface point cloud based on feature points in the surface point cloud and a surface feature of a measurement surface to which the surface point cloud belongs; wherein, the surface feature of each measurement surface is for describing a geometric attribute of the measurement surface;

constructing an objective optimization function for an estimated conversion relationship between a linear profiler coordinate system and a measurement platform coordinate system, based on the estimated conversion relationship and constraint relationships of surface point clouds;

optimizing the objective optimization function to obtain optimized conversion parameters between the linear profiler coordinate system and the measurement platform coordinate system as extrinsic parameters between the linear profiler and the measurement platform.

In the solution provided by the above embodiment of the present application, the linear profiler can be to collect the multiple frames of contour point clouds for the calibration block, and the frames of contour point clouds can be segmented into surface point clouds of the different measurement surfaces according to the different measurement surfaces to which the surface point clouds belong. In addition, since a geometric model of the calibration block is known, that is, the surface feature of each measurement surface of the calibration block is known, the constraint relationship of the surface point cloud belonging to the measurement surface can be established based on the surface feature of each measurement surface, and the objective optimization function is constructed, and then the conversion parameters between the linear profiler coordinate system and the measurement platform coordinate system are optimized, so as to obtain the extrinsic parameters between the linear profiler and the measurement platform. It can be seen that the embodiment of the present application achieves the calibration of the extrinsic parameters of the linear profiler.

In combination with the drawings attached to the specification, the calibration method for extrinsic parameters of a linear profiler provided by the embodiment of the present application is described in detail below.

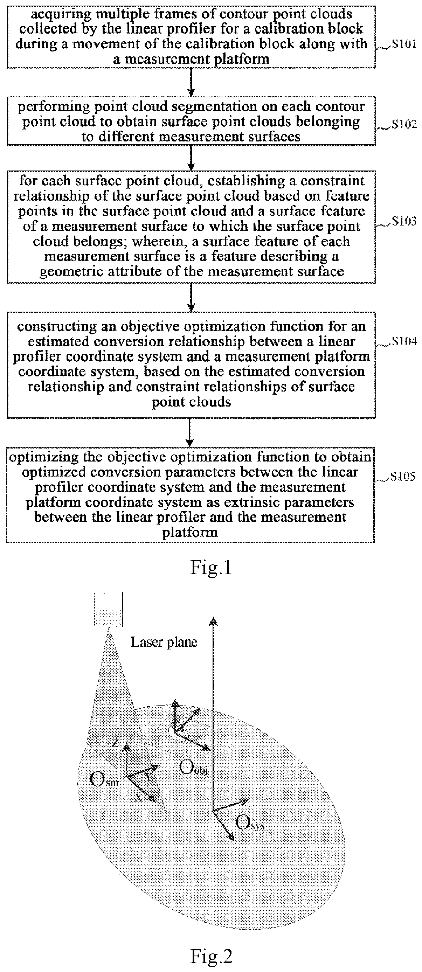

As shown in Fig. 1, a calibration method for extrinsic parameters of a linear profiler provided by an embodiment of the present application may include the following steps:

S101, acquiring multiple frames of contour point clouds collected by the linear profiler for a calibration block during a movement of the calibration block along with a measurement platform;

wherein, the calibration block is an object with a specific geometric shape, such as a cone, a sphere, a crater, a trapezoidal platform, etc. When it is necessary to calibrate the extrinsic parameters of the linear profiler, since the linear profiler can only collect a contour point cloud with a single linear shape at one time, in order to acquire complete contour information of the calibration block, it is necessary to make the linear profiler move relative to the calibration block, so that the linear profiler can continuously collect data for the calibration block during the whole movement, to obtain the complete contour information of the calibration block.

In the embodiment of the present application, the calibration block can be placed on the measurement platform, and the measurement platform can rotate or translate, so that the linear profiler can continuously collect data on the calibration block during the movement of the calibration block along with the measurement platform. When the measurement platform rotates, the calibration block can make a circular motion along with the rotation of the measurement platform; when the measurement platform translates, the calibration block can translate in a straight line along with the measurement platform.

As shown in Fig. 2, it is a schematic diagram of a collection performed by a linear profiler provided by an embodiment of the present application. In the figure, the bottom disk is the measurement platform, the cone on the bottom disk is the calibration block, the cube represents the linear profiler, and the triangle under the cube represents the data sampling plane of the linear profiler, i.e., the laser plane of the linear profiler. The measurement platform rotates around the central axis, and the cone makes a circular motion along with the rotation of the measurement platform. When the cone passes through a measurement region of the linear profiler during the motion of the cone, that is, when the cone contacts with the data sampling plane of the linear profiler, the linear profiler can collect the contour point cloud of the cone at a fixed sampling frequency. During the period from the cone entering the data sampling plane to leaving the data sampling plane, the linear profiler can collect the multiple frames of contour point clouds of the cone. Wherein, the data sampling plane is the light plane where the linear profiler emits the laser. In Fig. 2, the coordinate system Oobj is the calibration block coordinate system, the coordinate system Osys is the measurement platform coordinate system, and the coordinate system Osnr is the projection coordinate system of the linear profiler. Wherein, the directions of the X axis, the Y axis and the Z axis of the projection coordinate system of the linear profiler are consistent with corresponding one of the linear profiler coordinate system (not shown in Fig. 2), and the origin of the projection coordinate system is a projection point of the center point of the linear profiler on the measurement platform.

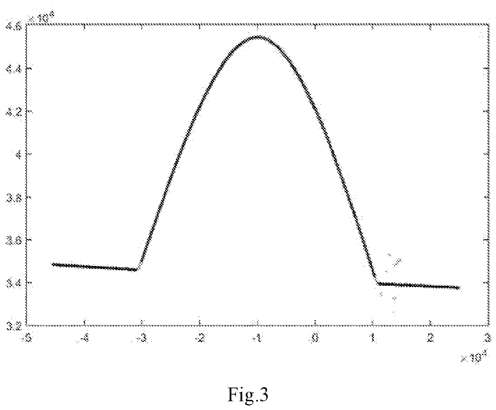

The above linear profiler can measure a depth data on one straight line by emitting the laser, as shown in Fig. 3, which is a schematic diagram of a contour point cloud collected by the linear profiler provided by an embodiment of the present application. **In** the figure, the abscissa is the X-axis of the linear profiler coordinate system and the ordinate is the Z-axis of the linear profiler coordinate system. Each frame of the contour point cloud collected by the linear profiler is a set of feature points. For the feature point in any contour point cloud, the coordinates of the feature point are (X round, 0, Z round). Therefore, for the linear profiler, the Y-axis direction of each feature point collected by the linear profiler in the linear profiler coordinate system presented as 0, and there is data only in the X-axis direction and the Z-axis direction of the linear profiler coordinate system.

S102, performing point cloud segmentation on each contour point cloud to obtain surface point clouds belonging to different measurement surfaces;

wherein, in order to obtain constraint relationships corresponding to feature points of the contour point clouds, in the embodiment of the present application, the point cloud segmentation can be performed on each contour point cloud, and then the surface point clouds belonging to the different measurement surfaces can be obtained.

The linear profiler measures the depth data on one straight line by emitting the laser, it means that each frame of the contour point cloud collected by the linear profiler generally contains the feature points belonging to the different measurement surfaces, wherein the measurement surface is composed of the geometric surface of the calibration block and the measurement platform. Taking the contour point cloud shown in Fig. 3 as an example, the contour point cloud is roughly composed of the left straight line segment, the middle curve segment and the right straight line segment, wherein, the feature points corresponding to the left straight line segment and the right straight line segment are feature points generated by the measurement platform and measured by the linear profiler when measuring, and feature points corresponding to the middle curve segment are feature points generated by the geometric surface of the calibration block and measured by the linear profiler when measuring.

In order to correctly establish the constraint relationships, in the embodiment of the present application, it is necessary to perform the point cloud segmentation on each contour point cloud, to obtain the surface point clouds belonging to the different measurement surfaces.

When measuring different calibration blocks, the obtained contour point clouds generally contain the surface point clouds of different measurement surfaces. For example, the contour point cloud obtained by measuring the cone calibration block contains the conical surface point cloud and the bottom surface point cloud, wherein the conical surface point cloud contains the feature points of the cone, and the bottom surface point cloud contains the feature points of the measurement platform. The contour point cloud obtained by measuring the sphere calibration block contains the spherical surface point cloud and the bottom surface point cloud, wherein, the spherical surface point cloud contains the feature points of the sphere, and the bottom surface point cloud contains the feature points of the measurement platform.

Optionally, for each contour point cloud, the point cloud segmentation can be performed on the contour point cloud based on a segmentation strategy corresponding to a type of the calibration block, to obtain the surface point clouds belonging to the different measurement surfaces.

As mentioned above, when measuring different calibration blocks, the obtained contour point clouds generally contains the surface point clouds of the different measurement surfaces; therefore, different segmentation strategies should be adopted to perform the segmentation on the contour point clouds.

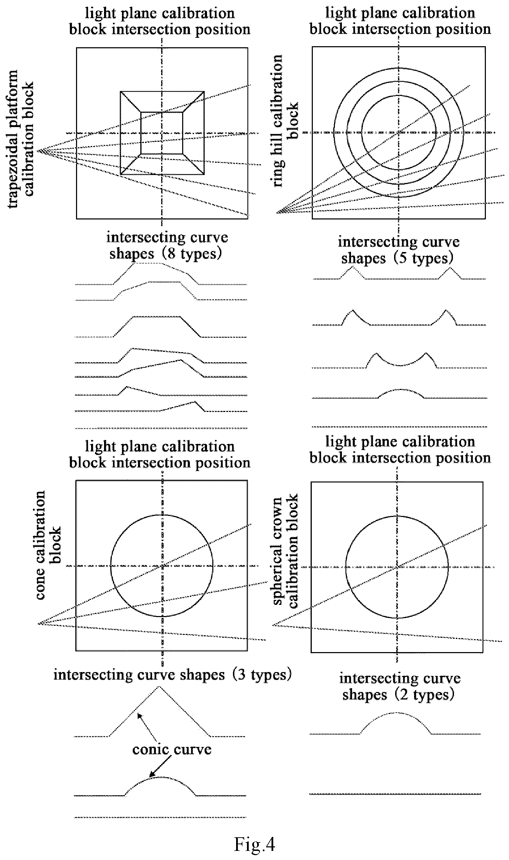

As shown in Fig. 4, the embodiment of the present application provides contour schematic diagrams of various types of calibration blocks, in which the straight line segment represents a possible intersection position of a light plane of the linear profiler (that is, a laser plane of the linear profiler) and the calibration block. Wherein, the trapezoidal platform calibration block intersects the laser plane of the linear profiler at different angles and positions, and possible surface contour types can be up to 8, that is, surface contour types of the contour point cloud collected by the linear profiler can be up to 8. The crater calibration block has 5 surface contour types, the cone calibration block has 3 surface contour types, and sphere calibration block has 2 surface profile types.

For the point cloud segmentation, the simpler the intersection contour is, the easier the point cloud segmentation is, and the more robust it is for various materials and environments.

In one implementation, if the calibration block is a cone, curve fitting and straight line fitting are performed on the feature points in the contour point cloud, and the feature points corresponding to the fitted curve are taken as a conical surface point cloud, and the feature points corresponding to the fitted straight line is determined as a bottom surface point cloud;

wherein, if the calibration block is the cone, it means that the obtained contour point cloud contains feature points of the cone and feature points of the measurement platform. A cone curve can be obtained by curve fitting of the feature points of the cone, and the straight line can be obtained by straight line fitting of the feature points of the measurement platform. Therefore, after obtaining the contour point cloud, the feature points corresponding to the fitted curve can be determined as the conical surface point cloud, and the feature points corresponding to the fitted straight line can be determined as the bottom surface point cloud from the feature points contained in the contour point clouds by curve fitting and straight line fitting.

In one implementation, if the calibration block is a sphere, circle fitting and the straight line fitting are performed on the feature points in the contour point cloud, and the feature points corresponding to the fitted curve are taken as a spherical surface point cloud, and feature points corresponding to the fitted straight line are taken as a bottom surface point cloud.

Wherein, if the calibration block is the sphere, it means that the obtained contour point cloud contains feature points of the sphere and feature points of the measurement platform. A spherical curve can be obtained by curve fitting of the feature points of the sphere, and straight line can be obtained by straight line fitting of the feature points of the measurement platform. Therefore, after obtaining the contour point cloud, the feature points corresponding to the fitted curve can be determined as the spherical surface point cloud, and the feature points corresponding to the fitted straight line can be determined as the bottom surface point cloud from the feature points contained in the contour point cloud by curve fitting and straight line fitting.

In one implementation, if the calibration block is a trapezoidal platform, the straight line fitting is performed on the feature points in the contour point cloud to obtain multiple fitted straight lines; the multiple fitted straight lines are classified, to obtain an endpoint-straight line containing an endpoint and a middle straight line without the endpoint; feature points corresponding to the middle straight line are taken as a platform surface point cloud, and feature points corresponding to the endpoint-straight line are taken as a bottom surface point cloud.

Wherein, if the calibration block is the trapezoidal platform, it means that the obtained contour point cloud contains feature points of the trapezoidal platform and of the measurement platform. The feature points of the trapezoidal platform and of the measurement platform can be segmented by the straight lines to obtain straight lines as fitted straight lines, wherein, in the multiple fitted straight lines, the endpoint-straight line containing an endpoint belongs to the measurement platform. Therefore, the feature points corresponding to the endpoint-straight line are taken as the bottom surface point cloud. The middle straight line without containing an endpoint belongs to the trapezoidal platform. Therefore, the feature points corresponding to the middle straight line are taken as the platform surface point cloud.

S103, for each surface point cloud, establishing a constraint relationship of the surface point cloud based on feature points in the surface point cloud and a surface feature of a measurement surface to which the surface point cloud belongs; wherein, the surface feature of each measurement surface is for describing a geometric attribute of the measurement surface;

After the surface point cloud is obtained by segmenting the contour point cloud, the constraint relationship of the surface point cloud can be constructed. Since the feature points of the surface point clouds belongs to the feature points of the measurement surface corresponding to the surface point cloud, and the surface features of the measurement surfaces can be determined based on the geometric model of the calibration block, the constraint relationship of the surface point cloud can be established based on the feature points in the surface point cloud and the surface feature of the measurement surface to which the surface point cloud belongs.

As an example, the constructed constraint relationship is:

$$g_i(X_{O,i,j,k}) = 0$$

wherein, $X_{O,i,j,k}$ is coordinates of the feature points on the measurement surfaces under the calibration block coordinate system O, i represents the contour point clouds collected for the calibration block, j represents the surface point clouds contained in the i-th frame of the contour point cloud, k represents the feature points contained in the j-th surface point cloud in the i-th frame of the contour point cloud, and $g_i(X_{O,i,j,k})$ represents the constraint relationship between the surface feature of the i-th measurement surface on the calibration block and the surface point cloud corresponding to the i-th measurement surface.

The specific constraint relationship depends on the type of the calibration block, different calibration blocks have different measurement surfaces, and different measurement surfaces have different surface features.

If the measurement surface is a plane, the constraint relationship between the surface feature of the plane and the surface point cloud corresponding to the plane is:

$$g_i(X_{O,i,j,k}) = \frac{ax_{O,i,j,k} + by_{O,i,j,k} + cz_{O,i,j,k} + d}{\sqrt{a^2 + b^2 + c^2}} = 0$$

wherein, a, b, c and d are the plane parameters of the calibration block surface, and $x_{O,i,j,k}$ is the X-axis coordinate of the k-th feature point on the j-th surface point cloud of the i-th frame of the contour point cloud under the calibration block coordinate system O, $y_{O,i,j,k}$ is the Y-axis coordinate of the k-th feature point on the j-th surface point cloud of the i-th frame of the contour point cloud under the calibration block coordinate system O, and $z_{O,i,j,k}$ is the z-axis coordinate of the k-th feature point on the j-th surface point cloud of the i-th frame of the contour point cloud under the calibration block coordinate system O.

If the feature point of the surface point cloud corresponding to the measurement surface refers to the conical surface, the constraint relationship between the surface feature of the conical surface and the corresponding surface point cloud is:

$$g_i(X_{O,i,j,k}) = \sqrt{x_{O,i,j,k}^2 + y_{O,i,j,k}^2} - \sqrt{\frac{D^2}{4h^2}(z_{O,i,j,k} - h)^2} = 0$$

wherein, h is the height of the cone and D is the bottom radius of the cone.

If the feature point of the surface point cloud corresponding to the measurement surface refers to a spherical surface, the constraint relationship between the surface feature of the spherical surface and the corresponding surface point cloud is:

$$g_i(X_{O,i,j,k}) = \sqrt{(x_{O,i,j,k} - x_o)^2 + (y_{O,i,j,k} - y_o)^2 + (z_{O,i,j,k} - z_o)^2} - r = 0$$

wherein, $x_o$, $y_o$, and $z_o$ are the center coordinates of the spherical surface, and r is the radius of the spherical surface.

In each constraint relationship above, the coordinates of the feature points are the coordinates of the feature point under the calibration block coordinate system O, and the coordinates of the feature points in the surface point cloud are the coordinates under the linear profiler coordinate system S. Therefore, the linear profiler coordinate system S needs to be transformed to the coordinates under the calibration block coordinate system O.

As an example, as illustrated in Fig. 2, the calibration block coordinate system is set as O, that is, Oobj in Fig. 2; the measurement platform coordinate system as M, that is, Osys in Fig. 2; the linear profiler coordinate system as S, and a projection coordinate system fixed and relative to the linear profiler coordinate system as | M', that is, Osnr in Fig. 2. Wherein, the directions of the X axis, the Y axis and the Z axis of the coordinate system M' are the same as the respective one of the linear profiler coordinate system S, and an origin of the coordinate system M' is a projection point of the center point of the linear profiler on the measurement platform.

Then the conversion relationship from the linear profiler coordinate system to the calibration block coordinate system is:

$$X_{O,i,j,k} = f(X_{S,i,j,k})$$

wherein, $f$ is a conversion function between the linear profiler coordinate system S and the calibration block coordinate system O, and $X_{S,i,j,k}$ represents the coordinates of the feature points in the surface point cloud corresponding to the i-th measurement surface in the linear profiler coordinate system S.

When the measurement platform is in rotational motion, the above conversion relationship can be expanded as follows:

$$X_{O,i,j,k} = f(X_{S,i,j,k}) = T_{OM} X_{M,i,j,k} = T_{OM} T_{MM'} \cdot T_{M'S} X_{S,i,j,k} = T_{OM} \begin{bmatrix} \exp(j \bullet step \bullet \begin{bmatrix} 0 \\ 0 \\ 1 \end{bmatrix}) & 0 \\ 0 & 1 \end{bmatrix}_{MM'} T_{M'S} X_{S,i,j,k}$$

wherein, $f$ is the conversion function between the linear profiler coordinate system S and the calibration block coordinate system O, and $X_{S,i,j,k}$ represents the coordinates of the feature points in the surface point cloud corresponding to the i-th measurement surface in the linear profiler coordinate system S, $T_{OM}$ is the conversion parameters between the measurement platform coordinate system M and the calibration block coordinate system O, $X_{M,i,j,k}$ represents the coordinates of the feature points in the surface point cloud corresponding to the i-th measurement surface under the

$$\begin{bmatrix} \exp(j \bullet step \bullet \begin{bmatrix} 0 \\ 0 \\ 1 \end{bmatrix}) & 0 \\ 0 & 1 \end{bmatrix}_{MM'}$$

measurement platform coordinate system M, $T_{MM'}$ and a deformation thereof are the conversion parameters between the measurement platform coordinate system M and the projection coordinate system M', $T_{M'S}$ is the conversion parameters between the projection coordinate system M' and the linear profiler coordinate system S, step is the sampling interval of the linear profiler.

The above conversion relationship contains the extrinsic parameters between the linear profiler coordinate system and the measurement platform coordinate system, which is the quantity to be calibrated.

For each surface point cloud, it is converted to feature points in the calibration block coordinate system based on the conversion relationship mentioned above, and substituted into the constraint relationships mentioned above, so as to obtain the constraint relationship of each surface point cloud.

S104, constructing an objective optimization function for an estimated conversion relationship between a linear profiler coordinate system and a measurement platform coordinate system, based on the estimated conversion relationship and constraint relationships of surface point clouds;

wherein, the estimated conversion relationship contains the estimated values of the extrinsic parameters between the linear profiler coordinate system and the measurement platform coordinate system, so that the estimated values can be substituted into the constraint relationships of the above surface point clouds to obtain the constraint relationships containing the estimated values. The above estimated values can be obtained based on the collected contour point clouds, and the specific implementation will be described in detail in the subsequent embodiment. Of course, the estimated value can also be empty.

After obtaining the constraint relationships containing the estimated value, the objective optimization function can be constructed based on the preset constraint relationships. Optionally, a residual of each surface point cloud can be constructed based on the constraint relationship of each surface point cloud, as follows:

$$e_{P,i,j,k} = g_i(X_{O,i,i,k}) = g_i(h(X_{S,i,i,k})) = 0$$

wherein, $e_{P,i,j,k}$ is a residual corresponding to the i-th surface point cloud, $h(X_{S,i,i,k})$ represents the feature points in the i-th measurement surface under the calibration block coordinate system converted from feature points in the i-th surface point cloud under the linear profiler coordinate system.

Then the objective optimization function is constructed as follows:

$$\arg[\xi_{OM} \quad \xi_{M'S} \quad step] \min \sum_{i=1}^{p}\sum_{j=1}^{n}\sum_{k=1}^{m} e_{i,j,k}^{T} \Sigma_{i,j,k} e_{i,j,k}$$

In the above formula, $\xi_{OM}$ is the conversion parameters between the calibration block coordinate system O and the measurement platform coordinate system M, and $\xi_{M'S}$ is the conversion parameters between the projection coordinate system M' and the linear profiler coordinate system S.

The objective optimization function is to calculate a minimum value of the sum of the residuals corresponding to surface point clouds.

S105, optimizing the objective optimization function to obtain optimized conversion parameters between the linear profiler coordinate system and the measurement platform coordinate system as extrinsic parameters between the linear profiler and the measurement platform.

After obtaining the objective optimization function, iteration optimization can be performed on conversion parameters in the objective optimization function. After each iteration, it can be determined whether a residual of the objective optimization function is less than a preset threshold. If the residual of the objective optimization function is less than the preset threshold, it means that parameters in the objective optimization function of the current iteration meet the requirement. At this time, the conversion parameters in the objective optimization function when the residual of the objective optimization function is less than the preset threshold can be taken as the extrinsic parameters between the linear profiler and the measurement platform. If the residual of the objective optimization function is not less than the preset threshold, the iteration continues until the residual of the objective optimization function is less than the preset threshold. Wherein, the above preset threshold can be determined according to requirement and experience. The residual of the objective optimization function is a sum of residuals corresponding to the surface point clouds.

In the above solution provided by the embodiment of the present application, the linear profiler can be adopted to collect the multiple frames of contour point clouds for the calibration block, and each frame of contour point cloud can be segmented into surface point clouds of the different measurement surfaces according to the different measurement surfaces to which the surface point clouds belong. In addition, since a geometric model of the calibration block is known, that is, the surface feature of each measurement surface of the calibration block is known, the constraint relationship of the surface point cloud belonging to the measurement surface can be established based on the surface feature of each measurement surface, and the objective optimization function is constructed, and then the conversion parameters between the linear profiler coordinate system and the measurement platform coordinate system are optimized, so as to obtain the extrinsic parameters between the linear profiler and the measurement platform. It can be seen that the embodiment of the present application achieves the calibration of the extrinsic parameters of the linear profiler.

The embodiment of the present application further provides another calibration method for extrinsic parameters of a linear profiler, after step S104, further including:

determining a coordinate system conversion relationship between the linear profiler coordinate system and the measurement platform coordinate system as the estimated conversion relationship based on the acquired multiple frames of contour point clouds.

After obtaining the multiple frames of contour point clouds, the coordinate system conversion relationship between the linear profiler coordinate system and the measurement platform coordinate system can be estimated based on the acquired multiple frames of contour point clouds as the estimated conversion relationship. The extrinsic parameters between the linear profiler coordinate system and the measurement platform coordinate system in the estimated conversion relationship are the estimated values, which are not accurate. However, based on the estimated value, the subsequent optimization of the objective optimization function can improve the optimization efficiency, as well as the optimization accuracy simultaneously.

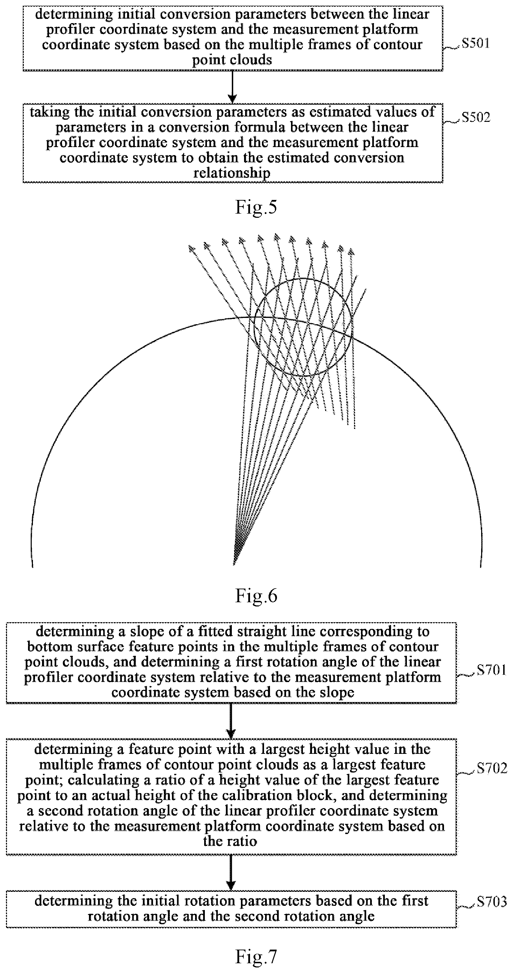

In one implementation, as shown in Fig. 5, determining the coordinate system conversion relationship between the linear profiler coordinate system and the measurement platform coordinate system as the estimated conversion relationship based on the acquired multiple frames of contour point clouds can include steps S501-S502, wherein:

S501, determining initial conversion parameters between the linear profiler coordinate system and the measurement platform coordinate system based on the multiple frames of contour point clouds;

In the embodiment of the present application, the measurement platform coordinate system takes the center of the measurement platform as an origin, an upward direction perpendicular to the measurement platform as the Z-axis direction, and a direction pointing to the linear profiler as the X-axis direction, the Y-axis direction of the measurement platform coordinate system is determined based on the Z-axis and X-axis directions. The calibration block coordinate system takes the geometric center of the calibration block as the origin, and the directions of the X axis, the Y axis and the Z axis of the calibration block coordinate system are the same as the respective one of the measurement platform coordinate system. The linear profiler coordinate system takes the geometric center of the linear profiler as the origin, and the X-axis direction thereof is parallel to the X-axis direction of the measurement platform coordinate system. The positive direction of the X-axis of the linear profiler coordinate system can be determined based on the contour point cloud.

Optionally, in one implementation, as shown in Fig. 6, an embodiment of the present application provides a schematic diagram for determining a positive direction of X axis.

In Fig. 6, the outermost semi-circular arc is a trajectory line along which the calibration block makes a circular movement, the circle in the figure represents a top view of the calibration block of a cone or sphere, and the multiple line segments radiating outward from the center point of the semi-circular arc in the figure are connecting lines between a vertex of the calibration block and the center point of the measurement plane at each sampling time, the line segments with arrow in the figure are sampling positions by the linear profiler on the calibration block at each sampling time, and origins of the line segments with arrow are the positions at which the feature point with the maximum value in the contour point cloud sampled by the linear profiler is located at each sampling time.

In this method, the coordinates of the feature point with the maximum value in each frame of the contour point cloud can be calculated, and then a curvature of the connecting line of the feature points with the maximum value in the frames of contour point clouds can be determined, and the curvature direction can be determined as the positive direction of the X axis of the linear profiler coordinate system. For example, if the curvature direction is negative, the positive direction of the X-axis of the linear profiler coordinate system is away from the center of the measurement platform; on the contrary, if the curvature direction is positive, the positive direction of the X-axis of the linear profiler coordinate system is pointing to the center point of the measurement platform. The positive direction of the X axis of the linear profiler coordinate system determined in this way can be to judge subsequently the direction of the Euler Angle.

The initial conversion parameters between the linear profiler coordinate system and the measurement platform coordinate system may include the initial rotation parameters and/or the initial translation parameters, wherein each rotation parameter indicates a rotation angle required for each direction axis when the linear profiler coordinate system is converted to the measurement platform coordinate system, each translation parameter indicates a moving distance traveled by the origin of the linear profiler coordinate system in each direction axis when the linear profiler coordinate system is converted to the measurement platform coordinate system. For logical coherence, the determination process of the initial conversion parameters will be described in detail in the subsequent embodiments.

S502, taking the initial conversion parameters as estimated values of parameters in a conversion formula between the linear profiler coordinate system and the measurement platform coordinate system to obtain the estimated conversion relationship.

After obtaining the initial conversion parameters between linear profiler coordinate system and the measurement platform coordinate system, the initial conversion parameters can be taken as the estimated values of parameters in the conversion formula between the linear profiler coordinate system and the measurement platform coordinate system, so that the estimated conversion relationship can be obtained.

In the above solution provided by the embodiment of the present application, the calibration of the extrinsic parameters between the linear profiler and the measurement platform can be achieved. At the same time, the estimated conversion relationship between the linear profiler coordinate system and the measurement platform coordinate system is estimated through the multiple frames of contour point clouds, which can improve the optimization efficiency and accuracy of the objective optimization function.

Optionally, in one embodiment, the initial conversion parameters include initial rotation parameters;

At this time, based on the embodiment shown in Fig. 5, as shown in Fig. 7, an embodiment of the present application further provides another calibration method for extrinsic parameters of a linear profiler. The step S501 may include steps S701-S703:

S701, determining a slope of a fitted straight line corresponding to bottom surface feature points in the multiple frames of contour point clouds, and determining a first rotation angle of the linear profiler coordinate system relative to the measurement platform coordinate system based on the slope;

wherein, the bottom surface feature point is the feature point belonging to the measurement platform. As illustrated in Fig. 3, the slope of the fitted straight line corresponding to the bottom surface point cloud can be calculated, denoted as ry, and then ry can be converted into an angle value, which is taken as the first rotation angle of the linear profiler coordinate system relative to the measurement platform coordinate system.

S702, determining a feature point with a largest height value in the multiple frames of contour point clouds as a largest feature point; calculating a ratio of a height value of the largest feature point to an actual height of the calibration block, and determining a second rotation angle of the linear profiler coordinate system relative to the measurement platform coordinate system based on the ratio;

Optionally, the second rotation angle can be calculated from a maximum vertex, denoted rx. Since the cone curve of each frame of the contour point cloud can get one vertex, a distance between the vertex and the bottom surface straight line is the measured height of the vertex. **In** all contour point clouds, the vertex with a maximum height is a top position of the cone, so that the ratio of this height to the actual height of the cone can be calculated to obtain rx, and further rx is converted to the angle value as the second rotation angle of the linear profiler coordinate system relative to the measurement platform coordinate system.

S703, determining the initial rotation parameters based on the first rotation angle and the second rotation angle.

In this step, after obtaining the first rotation angle and the second rotation angle, the first rotation angle and the second rotation angle can be taken as the initial rotation parameters.

In the above solution provided by the embodiment of the present application, the calibration of the extrinsic parameters between the linear profiler and the measurement platform can be achieved. At the same time, the initial rotation parameters between the linear profiler coordinate system and the measurement platform coordinate system can be determined through the multiple frames of contour point clouds, so as to provide the implementation basis for improving the optimization efficiency and accuracy of the objective optimization function.

Optionally, in one embodiment, the initial conversion parameters include initial translation parameters;

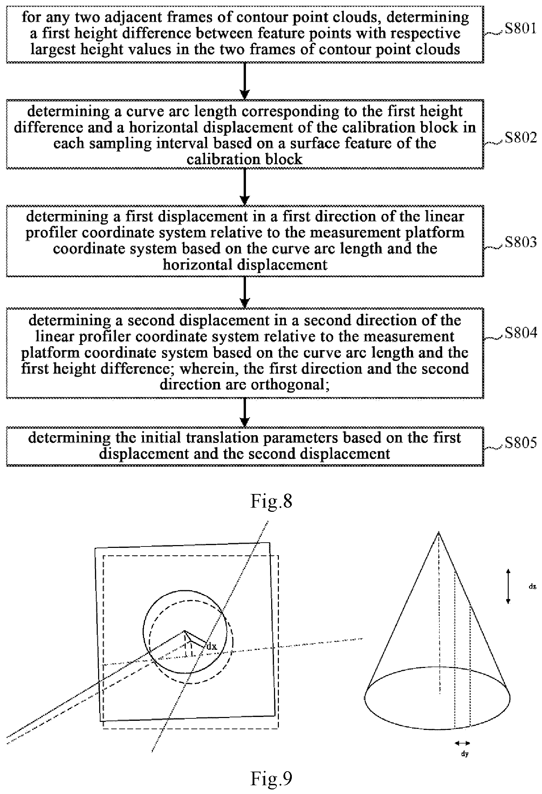

At this time, based on the embodiment shown in Fig. 5, as shown in Fig. 8, an embodiment of the present application further provides another calibration method for extrinsic parameters of a linear profiler. The step S502 may include steps S801-S805:

S801, for any two adjacent frames of contour point clouds, determining a first height difference between feature points with respective largest height values in the two frames of contour point clouds;

As shown in Fig. 9, an embodiment of the present application provides a height difference schematic diagram. In Fig. 9, the left solid lines and dashed lines respectively represent the top view positions of the calibration block during the movement of the calibration block along with the measurement plane in two adjacent measurements. In Fig. 9, the right side is the schematic diagram of the calibration block, the dashed line in the calibration block represents a center line of the calibration block, and the two solid line segments on the calibration block represent the measurement positions of the linear profiler during the movement of the calibration block along with the measurement plane in two adjacent measurements. The above first height difference is a height difference of the feature points with the largest height difference value in adjacent contour point clouds, which is taking as the first height difference, i.e., dz in Fig. 9.

S802, determining a curve arc length corresponding to the first height difference and a horizontal displacement of the calibration block in each sampling interval based on a surface feature of the calibration block;

wherein, after determining the first height difference, the curve arc length corresponding to the first height difference can be determined by combining the surface feature of the measurement surface of the calibration block, that is, a distance between two feature points with the largest height difference value on the calibration block surface, that is, dx in Fig. 9, and the horizontal displacement of the calibration block within the sampling interval can be determined, that is, dy in Fig. 9.

S803, determining a first displacement in a first direction of the linear profiler coordinate system relative to the measurement platform coordinate system based on the curve arc length and the horizontal displacement;

wherein, the ratio between the curve arc length and the horizontal displacement is calculated, and then the first displacement of the linear profiler coordinate system relative to the measurement platform coordinate system in the first direction is obtained. Optionally, the first direction can be the Z-axis direction, that is, the displacement of the linear profiler coordinate system relative to the measurement platform coordinate system in the Z-axis direction can be calculated as the first displacement.

S804, determining a second displacement in a second direction of the linear profiler coordinate system relative to the measurement platform coordinate system based on the curve arc length and the first height difference; wherein, the first direction and the second direction are orthogonal;

wherein, the ratio between the curve arc length and the first height difference is calculated, and then the second displacement of the linear profiler coordinate system relative to the measurement platform coordinate system in the second direction is obtained. Optionally, the second direction can be the X-axis direction, that is, the displacement of the linear profiler coordinate system relative to the measurement platform coordinate system in the X-axis direction can be determined as the second displacement.

S805, determining the initial translation parameters based on the first displacement and the second displacement.

In this step, the first displacement and the second displacement can be taken as the initial translation parameters. Further, the initial translation parameters can include ty=0, that is, the linear profiler coordinate system is translated by a distance of 0 in the Y-axis direction relative to the measurement platform coordinate system.

In the above solution provided by the embodiment of the present application, the calibration of the extrinsic parameters between the linear profiler and the measurement platform can be achieved. At the same time, the initial translation parameters between the linear profiler coordinate system and the measurement platform coordinate system can be determined through the multiple frames of contour point clouds, so as to provide the implementation basis for improving the optimization efficiency and accuracy of the objective optimization function.

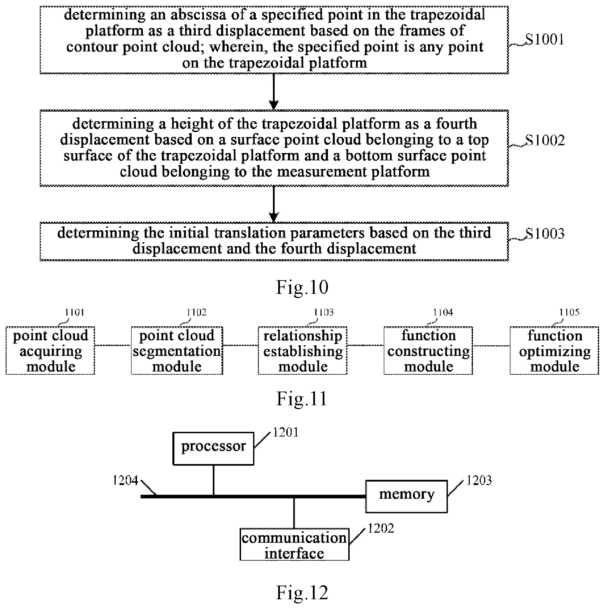

Optionally, in another embodiment in which the initial conversion parameters include the initial translation parameters, the above calibration block may be a trapezoidal platform. In this case, based on the embodiment shown in Fig. 5, as shown in Fig. 10, an embodiment of the present application further provides another calibration method for extrinsic parameters of a linear profiler. The step S502 may include steps S1001-S1003:

S1001, determining an abscissa of a specified point in the trapezoidal platform as a third displacement based on the frames of contour point cloud; wherein, the specified point is any point on the trapezoidal platform;

In this step, the abscissa of the specified point in the trapezoidal platform can be determined as the third displacement based on the frames of contour point clouds. Wherein, the specified point is any point on the trapezoidal platform, such as a center point of the top surface of the trapezoidal platform, or any one of four corner points of the top surface, or any one of four corner points of the bottom surface of the trapezoidal platform. Optionally, the above third displacement can also be 0, which is also possible.

Optionally, when the specified point is the center point of the top surface of the trapezoidal platform, a contour point cloud of a middle position in the frames of contour point clouds can be determined, an abscissa of a feature point at the middle position can further be determined as the third displacement.

S1002, determining a height of the trapezoidal platform as a fourth displacement based on a surface point cloud belonging to a top surface of the trapezoidal platform and a bottom surface point cloud belonging to the measurement platform;

Optionally, a height difference between the top surface of the trapezoidal platform and the bottom surface of the measurement platform can be determined as the height of the trapezoidal platform, that is, the fourth displacement, by using the surface point cloud belonging to the top surface of the trapezoidal platform and the bottom surface point cloud belonging to the measurement platform.

S1003, determining the initial translation parameters based on the third displacement and the fourth displacement.

In this step, the third displacement and fourth displacement can be taken as the initial translation parameter. Further, the initial translation parameters can include ty=0, that is, the linear profiler coordinate system is translated by a distance of 0 in the Y-axis direction relative to the measurement platform coordinate system.

In the above solution provided by the embodiment of the present application, the calibration of the extrinsic parameters between the linear profiler and the measurement platform can be achieved. At the same time, the initial translation parameters between the linear profiler coordinate system and the measurement platform coordinate system can be determined through the multiple frames of contour point clouds, so as to provide the implementation basis for improving the optimization efficiency and accuracy of the objective optimization function.

Corresponding to the method provided by the above embodiment of the present application, as shown in Fig. 11, an embodiment of the present application further provides a calibration apparatus for extrinsic parameters of a linear profiler, including:

a point cloud acquiring module 1101, configured to acquire multiple frames of contour point clouds collected by the linear profiler for a calibration block during a movement of the calibration block along with a measurement platform;

a point cloud segmentation module 1102, configured to perform point cloud segmentation on each contour point cloud to obtain surface point clouds belonging to different measurement surfaces;

a relationship establishing module 1103, configured for each surface point cloud, to establish a constraint relationship of the surface point cloud based on feature points in the surface point cloud and a surface feature of a measurement surface to which the surface point cloud belongs;

a function constructing module 1104, configured to construct an objective optimization function for an estimated conversion relationship between a linear profiler coordinate system and a measurement platform coordinate system, based on the estimated conversion relationship and the constraint relationships of the surface point clouds;

a function optimizing module 1105, configured to optimize the objective optimization function to obtain optimized conversion parameters between the linear profiler coordinate system and the measurement platform coordinate system as extrinsic parameters between the linear profiler and the measurement platform.

Optionally, the point cloud segmentation module is specifically configured to configured for each contour point cloud, to perform the point cloud segmentation on the contour point cloud based on a segmentation strategy corresponding to a type of the calibration block, to obtain the surface point clouds belonging to the different measurement surfaces.

Optionally, the point cloud segmentation module is specifically configured to, if the calibration block is a cone, perform curve fitting and straight line fitting on the feature points in the contour point cloud, and take the feature points corresponding to the fitted curve as a conical surface point cloud, and determine feature points corresponding to the fitted straight line as a bottom surface point cloud; if the calibration block is a sphere, perform circle fitting and the straight line fitting on the feature points in the contour point cloud, and take the feature points corresponding to the fitted curve as a spherical surface point cloud, and take feature points corresponding to the fitted straight line as the bottom surface point cloud; if the calibration block is a trapezoidal platform, perform the straight line fitting on the feature points in the contour point cloud to obtain multiple fitted straight lines; classify the multiple fitted straight lines to obtain an endpoint-straight line containing an endpoint and a middle straight line containing no endpoint; take feature points corresponding to the middle straight line as a platform surface point cloud, and take feature points corresponding to the endpoint-straight line as a bottom surface point cloud.

Optionally, the apparatus further includes:

a relationship estimating module, configured to determine a coordinate system conversion relationship between the linear profiler coordinate system and the measurement platform coordinate system as the estimated conversion relationship based on the acquired multiple frames of contour point clouds, before the function constructing module constructs the objective optimization function for the estimated conversion relationship between the linear profiler coordinate system and the measurement platform coordinate system, based on the estimated conversion relationship and the constraint relationships of the surface point clouds.

Optionally, the relationship estimating module is specifically configured to determine initial conversion parameters between the linear profiler coordinate system and the measurement platform coordinate system based on the multiple frames of contour point clouds; take the initial conversion parameters as estimated values of parameters in a conversion formula between the linear profiler coordinate system and the measurement platform coordinate system to obtain the estimated conversion relationship.

Optionally, the initial conversion parameters include initial rotation parameters;

the relationship estimating module is specifically configured to determine a slope of a fitted straight line corresponding to bottom surface feature points in the multiple frames of contour point clouds, and determine a first rotation angle of the linear profiler coordinate system relative to the measurement platform coordinate system based on the slope; wherein, the bottom surface feature points are the feature points belonging to the measurement platform; determine a feature point with a largest height value in the multiple frames of contour point clouds as a largest feature point; calculate a ratio of a height value of the largest feature point to an actual height of the calibration block, and determine a second rotation angle of the linear profiler coordinate system relative to the measurement platform coordinate system based on the ratio; determine the initial rotation parameters based on the first rotation angle and the second rotation angle.

Optionally, the initial conversion parameters include initial translation parameters;

the relationship estimating module is specifically configured to for any two adjacent frames of contour point clouds, determine a first height difference of feature points with respective largest height values in the two frames of contour point clouds; determine a curve arc length corresponding to the first height difference and a horizontal displacement of the calibration block in each sampling interval based on a surface feature of the calibration block; determine a first displacement in a first direction of the linear profiler coordinate system relative to the measurement platform coordinate system based on the curve arc length and the horizontal displacement; determine a second displacement in a second direction of the linear profiler coordinate system relative to the measurement platform coordinate system based on the curve arc length and the first height difference; wherein, the first direction and the second direction are orthogonal; determine the initial translation parameters based on the first displacement and the second displacement; or, determine an abscissa of a specified point in the trapezoidal platform as a third displacement based on the frames of contour point clouds; wherein, the specified point is any point on the trapezoidal platform; determine a height of the trapezoidal platform as a fourth displacement based on a surface point cloud belonging to a top surface of the trapezoidal platform and a bottom surface point cloud belonging to the measurement platform; determine the initial translation parameters based on the third displacement and the fourth displacement.

Optionally, the function optimizing module is specifically configured to perform iteration optimization to the conversion parameters in the objective optimization function until a residual of the objective optimization function is less than a preset threshold; take the conversion parameters in the objective optimization function when the residual of the objective optimization function is less than the preset threshold as the extrinsic parameters between the linear profiler and the measurement platform.

In the above solution provided by the embodiment of the present application, the linear profiler can be to collect the multiple frames of contour point clouds for the calibration block, and the frames of contour point clouds can be segmented into surface point clouds of the different measurement surfaces according to the different measurement surfaces to which the surface point clouds belong. In addition, since a geometric model of the calibration block is known, that is, the surface feature of each measurement surface of the calibration block is known, the constraint relationship of the surface point cloud belonging to the measurement surface can be established based on the surface feature of each measurement surface, and the objective optimization function is constructed, and then the conversion parameters between the linear profiler coordinate system and the measurement platform coordinate system are optimized, so as to obtain the extrinsic parameters between the linear profiler and the measurement platform. It can be seen that the embodiment of the present application achieves the calibration of the extrinsic parameters of the linear profiler.

An embodiment of the present application further provides an electronic device, as shown in Fig. 12, which includes a processor 1201, a communication interface 1202, a memory 1203 and a communication bus 1204, wherein the processor 1201, the communication interface 1202 and the memory 1203 communicate with each other through the communication bus 1204,

the memory 1203 is configured to store a computer program;

the processor 1201 is configured to implement the method steps provided by the above embodiment of the present application when executing the program stored on the memory 1203.

The communication bus mentioned in the above electronic device can be a Peripheral Component Interconnect (PCI) bus or an Extended Industry Standard Architecture (EISA) bus, etc. The communication bus can be segmented into an address bus, a data bus, a control bus and the like. For ease of presentation, only one thick straight line is shown in the figure, which does not mean that there is only one bus or one type of bus.

The communication interface is used for communication between the electronic device and other devices.

The memory may include a Random Access Memory (RAM), or a Non-Volatile memory (NVM), such as at least one disk memory. Optionally, the memory may also be at least one storage device located away from the processor.

The above processor may be a general-purpose processor, including a Central Processing Unit (CPU), a Network Processor (NP), etc.; it may also be a Digital Signal Processor (DSP), an Application Specific Integrated Circuit (ASIC), a Field-Programmable Gate Array (FPGA) or other programmable logic devices, discrete gates or transistor logic devices, discrete hardware components.

In yet another embodiment provided by the present application, a computer-readable storage medium is further provided, which stores a computer program therein, which when executed by a processor, implements any steps of the above calibration method for extrinsic parameters of a linear profiler.

In yet another embodiment provided by the present application, a computer program containing instructions is further provided, which when running on a computer, cause the computer to carry out any of the calibration method for extrinsic parameters of a linear profiler in the above embodiment.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any available medium that can be accessed by a computer or a data storage device such as a server and a data center and the like that includes an integration of one or more available medium. The available medium may be magnetic media (such as a floppy disk, a hard disk, a magnetic tape), optical media (such as DVD), or Solid State Disk (SSD) and the like.

It should be noted that in this article, relational terms such as first and second are only to distinguish one entity or operation from another, and do not necessarily require or imply any actual relationship or order between these entities or operations. Moreover, the terms "include", "comprise", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "including one..." do not exclude the existence of other identical elements in the process, method, article, or device that includes the elements.

The various embodiments in this specification are described in a relevant manner. Each embodiment focuses on the differences from other embodiments, and the same and similar parts between the various embodiments can be referred to each other. In particular, for the embodiments of the apparatus, device and system, the description is relatively simple because it is basically similar to the embodiment of the method, the description is relatively simple, and the relevant points can be referred to the partial description of the embodiment of the method.

**Claims**

1. A calibration method for extrinsic parameters of a linear profiler, comprising:

   acquiring multiple frames of contour point clouds collected by the linear profiler for a calibration block during a movement of the calibration block along with a measurement platform;
   performing point cloud segmentation on each contour point cloud to obtain surface point clouds belonging to different measurement surfaces;
   for each surface point cloud, establishing a constraint relationship of the surface point cloud based on feature points in the surface point cloud and a surface feature of a measurement surface to which the surface point cloud belongs; wherein, a surface feature of each measurement surface is a feature describing a geometric attribute of the measurement surface;
   constructing an objective optimization function for an estimated conversion relationship between a linear profiler coordinate system and a measurement platform coordinate system, based on the estimated conversion relationship and constraint relationships of surface point clouds;
   optimizing the objective optimization function to obtain optimized conversion parameters between the linear profiler coordinate system and the measurement platform coordinate system as extrinsic parameters between the linear profiler and the measurement platform.

2. The method according to claim 1, wherein, performing the point cloud segmentation on each contour point cloud to obtain the surface point clouds belonging to the different measurement surfaces comprises:
   for each contour point cloud, performing the point cloud segmentation on the contour point cloud based on a segmentation strategy corresponding to a type of the calibration block, to obtain the surface point clouds belonging to the different measurement surfaces.

3. The method according to claim 2, wherein, performing the point cloud segmentation on the contour point cloud based on the segmentation strategy corresponding to the type of the calibration block, to obtain the surface point clouds belonging to the different measurement surfaces comprises:

   if the calibration block is a cone, performing curve fitting and straight line fitting on feature points in the contour point cloud, and taking feature points corresponding to a fitted curve as a conical surface point cloud, and determining feature points corresponding to a fitted straight line as a bottom surface point cloud;
   if the calibration block is a sphere, performing circle fitting and straight line fitting on feature points in the contour point cloud, and taking feature points corresponding to a fitted curve as a spherical surface point cloud, and taking feature points corresponding to a fitted straight line as a bottom surface point cloud;
   if the calibration block is a trapezoidal platform, performing straight line fitting on feature points in the contour point cloud to obtain multiple fitted straight lines; classifying the multiple fitted straight lines to obtain an endpoint-straight line containing an endpoint and a middle straight line containing no endpoint; taking feature points corresponding to the middle straight line as a platform surface point cloud, and taking feature points corresponding to the endpoint-straight line as a bottom surface point cloud.

4. The method according to any one of claims 1-3, wherein, before constructing the objective optimization function for the estimated conversion relationship between the linear profiler coordinate system and the measurement platform coordinate system, based on the estimated conversion relationship and the constraint relationships of the surface point clouds, the method further comprises:
determining a coordinate system conversion relationship between the linear profiler coordinate system and the measurement platform coordinate system as the estimated conversion relationship based on acquired multiple frames of contour point clouds.

**5.** The method according to claim 4, wherein, determining the coordinate system conversion relationship between the linear profiler coordinate system and the measurement platform coordinate system as the estimated conversion relationship based on the acquired multiple frames of contour point clouds comprises:

determining initial conversion parameters between the linear profiler coordinate system and the measurement platform coordinate system based on the multiple frames of contour point clouds;
taking the initial conversion parameters as estimated values of parameters in a conversion formula between the linear profiler coordinate system and the measurement platform coordinate system to obtain the estimated conversion relationship.

**6.** The method according to claim 5, wherein, the initial conversion parameters comprise initial rotation parameters;
determining the initial conversion parameters between the linear profiler coordinate system and the measurement platform coordinate system based on the multiple frames of contour point clouds comprises:

determining a slope of a fitted straight line corresponding to bottom surface feature points in the multiple frames of contour point clouds, and determining a first rotation angle of the linear profiler coordinate system relative to the measurement platform coordinate system based on the slope; wherein, the bottom surface feature points are feature points belonging to the measurement platform;
determining a feature point with a largest height value in the multiple frames of contour point clouds as a largest feature point; calculating a ratio of a height value of the largest feature point to an actual height of the calibration block, and determining a second rotation angle of the linear profiler coordinate system relative to the measurement platform coordinate system based on the ratio;
determining the initial rotation parameters based on the first rotation angle and the second rotation angle.

**7.** The method according to claim 5, wherein, the initial conversion parameters comprise initial translation parameters;
determining the initial conversion parameters between the linear profiler coordinate system and the measurement platform coordinate system based on the multiple frames of contour point clouds comprises:

for any two adjacent frames of contour point clouds, determining a first height difference between feature points with respective largest height values in the two adjacent frames of contour point clouds; determining a curve arc length corresponding to the first height difference and a horizontal displacement of the calibration block in each sampling interval based on a surface feature of the calibration block; determining a first displacement in a first direction of the linear profiler coordinate system relative to the measurement platform coordinate system based on the curve arc length and the horizontal displacement; determining a second displacement in a second direction of the linear profiler coordinate system relative to the measurement platform coordinate system based on the curve arc length and the first height difference; wherein, the first direction and the second direction are orthogonal; determining the initial translation parameters based on the first displacement and the second displacement; or, determining an abscissa of a specified point in the trapezoidal platform as a third displacement based on the frames of contour point clouds; wherein, the specified point is any point on the trapezoidal platform; determining a height of the trapezoidal platform as a fourth displacement based on a surface point cloud belonging to a top surface of the trapezoidal platform and a bottom surface point cloud belonging to the measurement platform; determining the initial translation parameters based on the third displacement and the fourth displacement.

**8.** The method according to any one of claims 1-7, wherein, optimizing the objective optimization function to obtain the optimized conversion parameters between the linear profiler coordinate system and the measurement platform coordinate system as the extrinsic parameters between the linear profiler and the measurement platform comprises:

performing iteration optimization to conversion parameters in the objective optimization function until a residual of the objective optimization function is less than a preset threshold;
taking conversion parameters in the objective optimization function when the residual of the objective optimization function is less than the preset threshold as the extrinsic parameters between the linear profiler and the measurement platform.

9. A calibration apparatus for extrinsic parameters of a linear profiler, comprising:

a point cloud acquiring module, configured to acquire multiple frames of contour point clouds collected by the linear profiler for a calibration block during a movement of the calibration block along with a measurement platform;
a point cloud segmentation module, configured to perform point cloud segmentation on each contour point cloud to obtain surface point clouds belonging to different measurement surfaces;
a relationship establishing module, configured to, for each surface point cloud, establish a constraint relationship of the surface point cloud based on feature points in the surface point cloud and a surface feature of a measurement surface to which the surface point cloud belongs;
a function constructing module, configured to construct an objective optimization function for an estimated conversion relationship between a linear profiler coordinate system and a measurement platform coordinate system, based on the estimated conversion relationship and constraint relationships of surface point clouds;
a function optimizing module, configured to optimize the objective optimization function to obtain optimized conversion parameters between the linear profiler coordinate system and the measurement platform coordinate system as extrinsic parameters between the linear profiler and the measurement platform.

10. The apparatus according to claim 9, wherein, the point cloud segmentation module is specifically configured to, for each contour point cloud, perform the point cloud segmentation on the contour point cloud based on a segmentation strategy corresponding to a type of the calibration block, to obtain the surface point clouds belonging to the different measurement surfaces.

11. The apparatus according to claim 10, wherein, the point cloud segmentation module is specifically configured to, if the calibration block is a cone, perform curve fitting and straight line fitting on feature points in the contour point cloud, and take feature points corresponding to a fitted curve as a conical surface point cloud, and determine feature points corresponding to a fitted straight line as a bottom surface point cloud; if the calibration block is a sphere, perform circle fitting and straight line fitting on feature points in the contour point cloud, and take feature points corresponding to a fitted curve as a spherical surface point cloud, and take feature points corresponding to a fitted straight line as a bottom surface point cloud; if the calibration block is a trapezoidal platform, perform straight line fitting on feature points in the contour point cloud to obtain multiple fitted straight lines; classify the multiple fitted straight lines to obtain an endpoint-straight line containing an endpoint and a middle straight line containing no endpoint; take feature points corresponding to the middle straight line as a platform surface point cloud, and take feature points corresponding to the endpoint-straight line as a bottom surface point cloud.

12. The apparatus according to any one of claims 9-11, wherein, the apparatus further comprises:
a relationship estimating module, configured to determine a coordinate system conversion relationship between the linear profiler coordinate system and the measurement platform coordinate system as the estimated conversion relationship based on the acquired multiple frames of contour point clouds, before the function constructing module constructs the objective optimization function for the estimated conversion relationship between the linear profiler coordinate system and the measurement platform coordinate system, based on the estimated conversion relationship and the constraint relationships of the surface point clouds.

13. The apparatus according to claim 12, wherein, the relationship estimating module is specifically configured to determine initial conversion parameters between the linear profiler coordinate system and the measurement platform coordinate system based on the multiple frames of contour point clouds; take the initial conversion parameters as estimated values of parameters in a conversion formula between the linear profiler coordinate system and the measurement platform coordinate system to obtain the estimated conversion relationship.

14. An electronic device, comprising a processor, a communication interface, a memory and a communication bus, wherein the processor, the communication interface and the memory communicate with each other through the communication bus;

the memory is configured to store a computer program;
the processor is configured to implement the method steps according to any one of claims 1-8 when executing the program stored on the memory.

**15.** A computer-readable storage medium, which stores a computer program therein which, when executed by a processor, implements the method steps according to any one of claims 1-8.

acquiring multiple frames of contour point clouds collected by the linear profiler for a calibration block during a movement of the calibration block along with a measurement platform ⌐~S101

performing point cloud segmentation on each contour point cloud to obtain surface point clouds belonging to different measurement surfaces ⌐~S102

for each surface point cloud, establishing a constraint relationship of the surface point cloud based on feature points in the surface point cloud and a surface feature of a measurement surface to which the surface point cloud belongs; wherein, a surface feature of each measurement surface is a feature describing a geometric attribute of the measurement surface ⌐~S103

constructing an objective optimization function for an estimated conversion relationship between a linear profiler coordinate system and a measurement platform coordinate system, based on the estimated conversion relationship and constraint relationships of surface point clouds ⌐~S104

optimizing the objective optimization function to obtain optimized conversion parameters between the linear profiler coordinate system and the measurement platform coordinate system as extrinsic parameters between the linear profiler and the measurement platform ⌐~S105

Fig.1

Laser plane

$O_{snr}$

$O_{obj}$

$O_{sys}$

Fig.2

Fig.3

light plane calibration
block intersection position

light plane calibration
block intersection position

trapezoidal platform
calibration block

ring hill calibration
block

intersecting curve
shapes (8 types)

intersecting curve
shapes (5 types)

light plane calibration
block intersection position

light plane calibration
block intersection position

cone calibration
block

spherical crown
calibration block

intersecting curve shapes (3 types)

intersecting curve
shapes (2 types)

conic curve

Fig.4

determining initial conversion parameters between the linear profiler coordinate system and the measurement platform coordinate system based on the multiple frames of contour point clouds ⌐ S501

taking the initial conversion parameters as estimated values of parameters in a conversion formula between the linear profiler coordinate system and the measurement platform coordinate system to obtain the estimated conversion relationship ⌐ S502

Fig.5

Fig.6

determining a slope of a fitted straight line corresponding to bottom surface feature points in the multiple frames of contour point clouds, and determining a first rotation angle of the linear profiler coordinate system relative to the measurement platform coordinate system based on the slope ⌐ S701

determining a feature point with a largest height value in the multiple frames of contour point clouds as a largest feature point; calculating a ratio of a height value of the largest feature point to an actual height of the calibration block, and determining a second rotation angle of the linear profiler coordinate system relative to the measurement platform coordinate system based on the ratio ⌐ S702

determining the initial rotation parameters based on the first rotation angle and the second rotation angle ⌐ S703

Fig.7

for any two adjacent frames of contour point clouds, determining a first height difference between feature points with respective largest height values in the two frames of contour point clouds ~S801

determining a curve arc length corresponding to the first height difference and a horizontal displacement of the calibration block in each sampling interval based on a surface feature of the calibration block ~S802

determining a first displacement in a first direction of the linear profiler coordinate system relative to the measurement platform coordinate system based on the curve arc length and the horizontal displacement ~S803

determining a second displacement in a second direction of the linear profiler coordinate system relative to the measurement platform coordinate system based on the curve arc length and the first height difference; wherein, the first direction and the second direction are orthogonal; ~S804

determining the initial translation parameters based on the first displacement and the second displacement ~S805

Fig.8

Fig.9

determining an abscissa of a specified point in the trapezoidal platform as a third displacement based on the frames of contour point cloud; wherein, the specified point is any point on the trapezoidal platform

_S1001

determining a height of the trapezoidal platform as a fourth displacement based on a surface point cloud belonging to a top surface of the trapezoidal platform and a bottom surface point cloud belonging to the measurement platform

_S1002

determining the initial translation parameters based on the third displacement and the fourth displacement

_S1003

Fig.10

| 1101 | 1102 | 1103 | 1104 | 1105 |
|---|---|---|---|---|
| point cloud acquiring module | point cloud segmentation module | relationship establishing module | function constructing module | function optimizing module |

Fig.11

processor 1201

1204

memory 1203

communication interface 1202

Fig.12

<table>
<tr><td colspan="2" align="center">**INTERNATIONAL SEARCH REPORT**</td><td colspan="2">International application No.<br><br>**PCT/CN2023/095964**</td></tr>
<tr><td colspan="4">**A.**     **CLASSIFICATION OF SUBJECT MATTER**<br><br>     G01B21/20(2006.01)i;   G06T7/12(2017.01)i<br><br>According to International Patent Classification (IPC) or to both national classification and IPC</td></tr>
<tr><td colspan="4">**B.**     **FIELDS SEARCHED**</td></tr>
<tr><td colspan="4">Minimum documentation searched (classification system followed by classification symbols)<br><br>     IPC:   G01B; G06T</td></tr>
<tr><td colspan="4">Documentation searched other than minimum documentation to the extent that such documents are included in the fields searched</td></tr>
<tr><td colspan="4">Electronic data base consulted during the international search (name of data base and, where practicable, search terms used)<br><br>     CNTXT, CNKI, DWPI, WPABS, WEB OF SCIENCE: 轮廓, 测量, 测定, 标定, 校准, 校正, 外参, 参数, 点云, 特征, 约束, 坐标, 转换, 分割, 激光, contourgraph, measure, calibration, external parameters, point cloud, segmentation, constraint, conversion, laser, coordinate</td></tr>
<tr><td colspan="4">**C.**     **DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>PX</td><td colspan="2">CN 114923453 A (HANGZHOU HIKROBOT TECHNOLOGY CO., LTD.) 19 August 2022 (2022-08-19)<br>     claims 1-11, description, paragraphs [0099]-[0226], and figures 1-11</td><td>1-15</td></tr>
<tr><td>A</td><td colspan="2">CN 112179291 A (INSTITUTE OF OPTICS AND ELECTRONICS, CHINESE ACADEMY OF SCIENCES) 05 January 2021 (2021-01-05)<br>     description, paragraphs [0021]-[0045], and figures 1-5</td><td>1-15</td></tr>
<tr><td>A</td><td colspan="2">CN 113554697 A (SUZHOU NORTH AMERICA HIGH SCHOOL) 26 October 2021 (2021-10-26)<br>     entire document</td><td>1-15</td></tr>
<tr><td>A</td><td colspan="2">CN 107192350 A (INFORMATION ENGINEERING UNIVERSITY OF PLA) 22 September 2017 (2017-09-22)<br>     entire document</td><td>1-15</td></tr>
<tr><td>A</td><td colspan="2">CN 110196031 A (NORTHWESTERN UNIVERSITY) 03 September 2019 (2019-09-03)<br>     entire document</td><td>1-15</td></tr>
<tr><td colspan="2">☑ Further documents are listed in the continuation of Box C.</td><td colspan="2">☑ See patent family annex.</td></tr>
<tr><td colspan="2">*    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed</td><td colspan="2">"T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family</td></tr>
<tr><td colspan="2">Date of the actual completion of the international search<br><br>     **07 August 2023**</td><td colspan="2">Date of mailing of the international search report<br><br>     **18 August 2023**</td></tr>
<tr><td colspan="2">Name and mailing address of the ISA/CN<br><br>     **China National Intellectual Property Administration (ISA/CN)**<br>     **China No. 6, Xitucheng Road, Jimenqiao, Haidian District, Beijing 100088**</td><td colspan="2">Authorized officer<br><br><br><br><br>Telephone No.</td></tr>
</table>

Form PCT/ISA/210 (second sheet) (July 2022)

**INTERNATIONAL SEARCH REPORT**

International application No.

**PCT/CN2023/095964**

**C.    DOCUMENTS CONSIDERED TO BE RELEVANT**

| Category* | Citation of document, with indication, where appropriate, of the relevant passages | Relevant to claim No. |
|---|---|---|
| A | JP 2020159774 A (NIPPON STEEL CORP.) 01 October 2020 (2020-10-01)<br>        entire document | 1-15 |
| A | US 2010060904 A1 (3DM DEVICES INC.) 11 March 2010 (2010-03-11)<br>        entire document | 1-15 |

Form PCT/ISA/210 (second sheet) (July 2022)

INTERNATIONAL SEARCH REPORT
**Information on patent family members**

International application No.

**PCT/CN2023/095964**

| Patent document cited in search report | | | Publication date (day/month/year) | Patent family member(s) | | | Publication date (day/month/year) |
|---|---|---|---|---|---|---|---|
| CN | 114923453 | A | 19 August 2022 | None | | | |
| CN | 112179291 | A | 05 January 2021 | CN | 112179291 | B | 29 March 2022 |
| CN | 113554697 | A | 26 October 2021 | None | | | |
| CN | 107192350 | A | 22 September 2017 | CN | 107192350 | B | 12 July 2019 |
| CN | 110196031 | A | 03 September 2019 | CN | 110196031 | B | 09 June 2020 |
| JP | 2020159774 | A | 01 October 2020 | JP | 7156125 | B2 | 19 October 2022 |
| US | 2010060904 | A1 | 11 March 2010 | WO | 2010025561 | A1 | 11 March 2010 |
| | | | | US | 8035823 | B2 | 11 October 2011 |

Form PCT/ISA/210 (patent family annex) (July 2022)

**EP 4 534 953 A1**

**Patent documents cited in the description**

- CN 202210582401